# EUROPÄISCHE PATENTANMELDUNG

(11) **EP 1 211 201 A1**
(43) Veröffentlichungstag der Anmeldung: **05.06.2002**
(21) Anmeldenummer: 01127298.6
(22) Anmeldetag: 17.11.2001
(51) Int. Cl.: B65G 47/61, B65G 49/02, C25D 17/06

(54) **Vorrichtung für die automatisierte Handhabung und Zwischenpufferung von aufhängbaren Bauteilen**

(30) Priorität: 01.12.2000 DE 20020363 U
(71) Anmelder: Reisacher, Raimund, Dr.-Ing., 67117 Limburgerhof (DE)
(72) Erfinder: Reisacher, Raimund, Dr.-Ing., 67117 Limburgerhof (DE)
(74) Vertreter: Fischer, Wolf-Dieter, Dipl.-Ing.

(57) **Zusammenfassung**

Die Vorrichtung dient zur automatisierten Handhabung und Zwischenpufferung von aufhängbaren Bauteilen, wobei die Bauteile an staugeförderten Gestellen 1 mit Haken 4 aufgehängt sind. Es ist eine Quertraverse 9,9' mit zwei gegenüberliegenden nach innen gerichteten Leisten oder Rinnen 10, 42, 59, 56, 58, 8 zur Lastaufnahme vorgesehen, die sich innerhalb der Quertraverse befinden. An den Gestellen 1 sind Elemente 14, 48, 46, 61 zur Drehmomenteinleitung bei der Handhabung angeordnet. Die Gestelle 1 weisen auf der Vorder- und Rückseite Stauflächen auf. Weiterhin besitzen die Gestelle 1 auf der Unterseite oder auf Nebenflächen Haken 4, Klammern, Befestigungspunkte oder -schienen und sind nach unten gerichtet Auflageflächen für Regalkisten oder Fördersysteme vorgesehen.

## Beschreibung

Die Erfindung betrifft eine Vorrichtung für die automatisierte Handhabung und Zwischenpufferung von aufhängbaren Bauteilen, wobei die Bauteile an staugeförderten Gestellen mit Haken aufgehängt sind.

Bekannt ist ein Warenträger für eine Transport- oder Beschichtungsanlage, der einen rahmenartigen Aufbau mit mindestens zwei Aufnahmepunkten besitzt. Die Werkstücke werden dann an den Rahmengestellen eingehängt. Mehrere aneinander gelegte Warenträger sind als Block transportierbar, wobei die Warenträger dann auch jederzeit vereinzelt werden können. Der wesentliche Nachteil dieser bekannten Ausführungsform besteht darin, dass durch den rahmenartigen Aufbau die Werkstücke in der Länge und Tiefe begrenzt sind. Ein weiterer wesentlicher Nachteil besteht darin, dass die Tragvorrichtung während eines Behandlungsprozesses mit in das Behandlungsprodukt eingetaucht wird. Wegen des rahmenartigen Aufbaus lassen sich die Produkte weder kippen noch schleppen. Es besteht auch nur eine Einzelaufnahmemöglichkeit, was bei einem eventuellen Umsetzen nachteilig ist. Weiterhin besteht keine Drehmomenteinleitung, wenn sich die Haken an dem Produkt herausdrehen oder das Produkt aufnehmen.

Der Erfindung liegt die Aufgabe zugrunde, eine Vorrichtung der eingangs genannten Art so auszubilden, dass ein anfängliches Beschikken des Warenträgersystems und abschließendes Entnehmen aus dem System mit einfachen Mitteln manuell oder automatisch, horizontal oder vertikal erfolgen kann, wobei das System in befahrbaren Hochregallagern oder in Maschinenzu- und -abführungen in beliebigen Palettenlängen zwischenspeicherbar und beim Be- und Entladevorgang und im palettierten Zustand lagefest und verdrehsicher arretierbar ist.

Dieser Aufgabe wird nach der Erfindung dadurch gelöst, dass eine Quertraverse mit zwei gegenüberliegenden nach innen gerichteten Leisten oder Rinnen zur Lastaufnahme vorgesehen sind, die sich oberhalbe der Quertraverse befinden, dass an den Gestellen Elemente zur Drehmomenteinleitung bei der Handhabung angeordnet sind, dass die Gestelle auf der Vorder- und Rückseite Stauflächen aufweisen, dass die Gestelle auf der Unterseite oder auf Nebenflächen Haken, Klammern, Befestigungpunkte oder -schienen besitzen und dass seitlich aussen gegenüberliegend und nach unten gerichtet Auflageflächen für Regalkisten oder Fördersysteme vorgesehen sind.

Vorteilhafte Ausgestaltungen der Erfindung ergeben sich aus den Ansprüchen 2 bis 22.

Die Erfindung wird in der nachfolgenden Beschreibung anhand von in den Zeichnungen dargestellten Ausführungsbeispielen näher erläutert.

Es zeigen,
- Fig. 1: eine erste Ausführungsform des Gestells im Aufriss,
- Fig. 2: einen Schnitt nach der Linie A-A in Fig. 1,
- Fig. 3: einen Grundriss von Fig. 1,
- Fig. 4: zwei aneinander anliegende Gestelle bei einer Stauförderung im Grundriss,
- Fig. 5: eine weitere Ausführungsform der Vorrichtung für die Ausbildung des Seitenblockes,
- Fig. 6: einen Schnitt nach der Linie B-B in Fig. 5,
- Fig. 7: einen Schnitt nach der Linie C-C in Fig. 6,
- Fig. 8 und 9: eine Ansicht einer Distanzscheibe in Drauf- und Seitenansicht,
- Fig. 10: eine weitere Ausführungsform des Seitenblocks im Aufriss,
- Fig. 11: eine Darstellung des Seitenblocks gemäß Fig. 10 mit einer Adapterplatte für eine Stapler im Aufriss,
- Fig. 12: eine Teilansicht der Vorrichtung mit einem Seitenblock gemäß einer weiteren Ausführungsform,
- Fig. 13: einen Schnitt der Linie D-D in Fig. 12
- Fig. 14: einen Grundriss von Fig. 12,
- Fig. 15: eine Draufsicht mit Seitenblöcken im staugeförderten Zustand,
- Fig. 16: eine Teilansicht der Vorrichtung im Aufriss mit einem Seitenblock gemäß einer weiteren Ausführungsform,
- Fig. 17: einen Schnitt nach der Linie E-E in Fig. 16,
- Fig. 18: einen Grundriss von Fig. 16,
- Fig. 19: einen Grundriss der Seitenblöcke im staugeförderten Zustand,
- Fig. 20: eine Teilansicht der Vorrichtung mit dem Seitenblock gemäß einer weiteren Ausführungsform im Aufriss,
- Fig. 21: einen Schnitt nach der Linie F-F in Fig. 20,
- Fig. 22: einen Grundriss von Fig. 20,
- Fig. 23: einen Grundriss der Seitenblöcke im staugeförderten Zustand,
- Fig. 24: eine Teilansicht der Vorrichtung mit einem Seitenblock gemäß einer weiteren Ausführungsform,
- Fig. 25: einen Schnitt nach der Linie G-G in Fig. 24,
- Fig. 26: einen Grundriss von Fig. 24,
- Fig. 28: eine Teilansicht der Vorrichtung im Aufriss mit einem Seitenblock gemäß einer weiteren Ausführungsform,
- Fig. 29: einen Schnitt nach der Linie H-H in Fig. 28,
- Fig. 30: einen Grundriss von Figur 28,
- Fig. 31: einen Grundriss der Seitenblöcke im staugeförderten Zustand,
- Fig. 32: einen Traversenbügel mit Seitenblock,
- Fig. 33: einen Schnitt nach der Linie J-J in Fig. 32,
- Fig. 34: eine Seitenansicht eines Blocks mit angegliederter Einlegeschiene,
- Fig. 35 und 36: ein Hakenelement in Aufriss und Seitenansicht,
- Fig. 37 und 38: eine Traverse mit eingeschobenem Nutenstein gemäß den Haken nach den Fig. 35 und 36 in einer Seitenansicht und im Aufriss,
- Fig. 39: eine Quertraverse als I-Träger in einer Seitenansicht,
- Fig. 40: die Ausführungsform nach Fig. 39 im Aufriss,
- Fig. 41: eine Seitenansicht der Ausführungsform gemäß Fig. 39 im staugeförderten Zustand,
- Fig. 42 und 43: Ausführungsformen des Hakens zum Anbringen an einer Quertraverse nach den Fig. 39 und 40 und
- Fig. 44 und 45: die Ausführungsform nach den Figuren 39 und 40 auf einem Rollen-Transport-System.

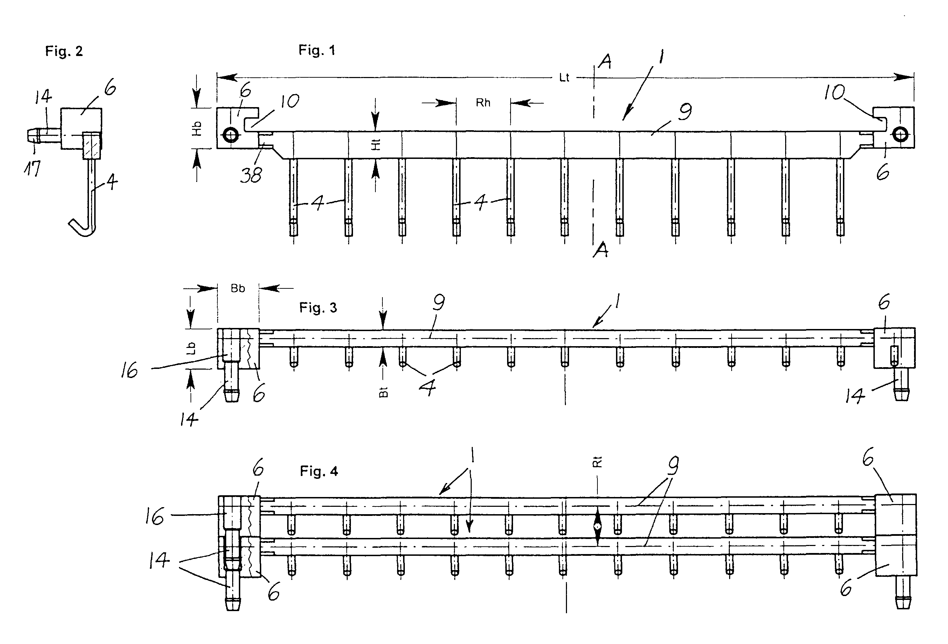

Die Figuren 1 bis 3 zeigen eine erste Ausführungsform für die Ausbildung eines Gestells 1, an dem einzelne Bauteile aufgehängt werden können, um die Traversen z. B. bei Hochregallagern zu palletieren. Dies erfolgt durch Innengreifen an den Seitenblöcken 6 zu beiden Seiten einer Quertraverse 9, wobei das Innengreifen eine sichere Aufnahme bedeutet, aus der sich die Palette nicht herausdrehen oder lösen kann. Das Gestell 1 besteht im wesentlichen aus den zwei quaderförmigen Seitenblöcken 6, wobei die Quertraverse 9 an den Seitenblöcken 6 an einem innenliegenden Wellenelement 38 angeordnet ist. An der Quertraverse 9 sind im Abstand zueinander Haken 4 angebracht, an denen die Bauteile aufgehängt werden. Die Quertraverse 9 kann als Vollwelle oder auch als Rohr ausgeführt sein.

Die Gesamtlänge Lt der Traverse 9 ist vorzugsweise 800 mm oder 1200 mm oder 2400 mm. Mit Ht ist die Höhe der Traverse 9 bezeichnet. Weiterhin ist die Breite der Traverse Bt, mit Bb die Breite und mit Lb die Länge des Seitenblocks gekennzeichnet. Hb ist die Höhe des Seitenblocks.

Bei einer Stauförderung von zwei Gestellen 1, wie in Fig. 4 dargestellt, ergibt sich ein Rasterabstand Rt.

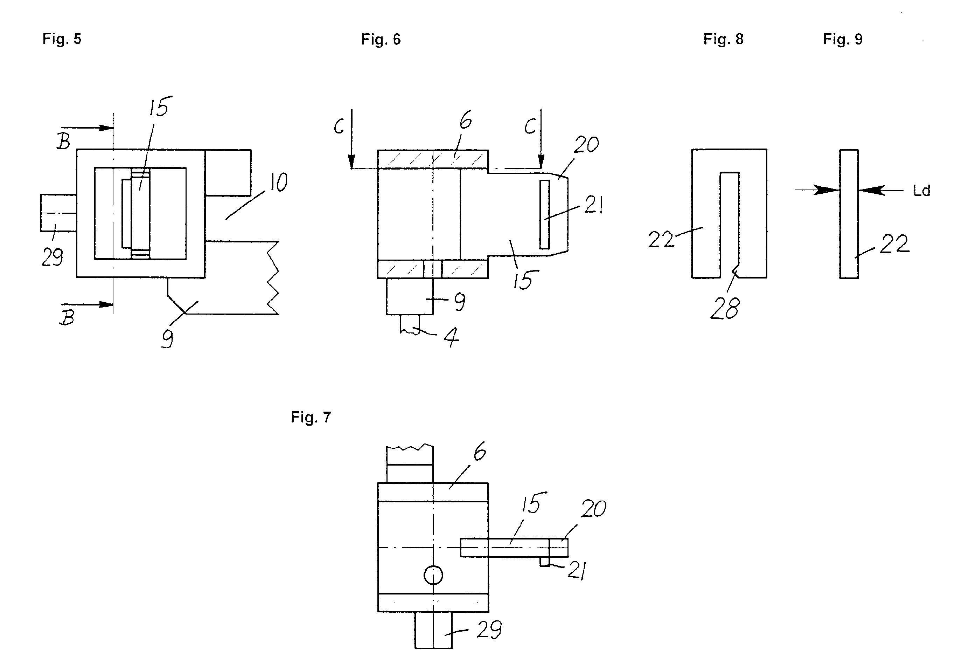

Bei der in den Figuren 5 bis 7 gezeigten Ausführungsform besitzt der Seitenblock 6 einen rechteckförmigen Durchtritt, in dem ein schmaler rechteckiger Stift 15 befestigt ist. Dieser aus Flacheisen bestehender Stift 15 weist an seiner Spitze 20 eine Sicherungsleiste 21 auf. Über diesen Stift 15 sind U-förmige Distanzscheiben selbstklemmend steckbar (Fig. 8 und 9), die an ihrer Öffnung einen Klemmzapfen 28 aufweisen. Mit Ld ist die Länge des Distanzstückes 22 bezeichnet. Zur Drehung um die Traversen-Längsachse sind aussenliegende Wellenelemente 29 vorgesehen.

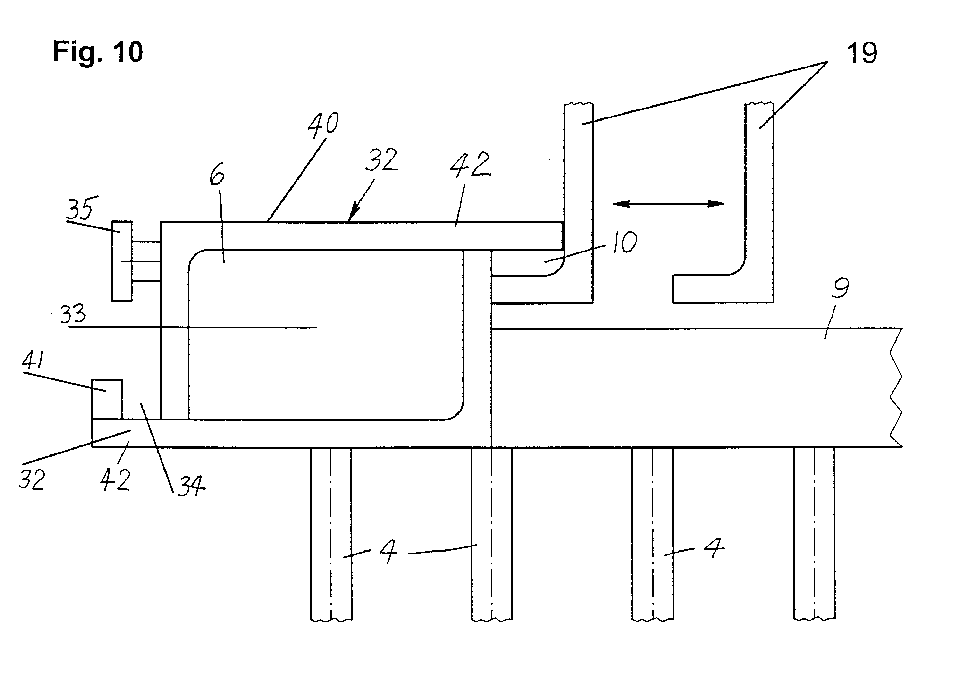

Die in Fig. 10 gezeigte Ausführungsform eines Seitenblockes 6 besteht im wesentlichen aus zwei L-förmigen Trägern 32, wobei die waagerechten Schenkel 42 dieser Träger 32 seitlich überstehen. Der obere Träger 32 bildet seitlich innen somit eine Aufnahmenut 10, in die die Zange eines Innengreifers 31 eingreifen kann. Der Innenraum des Seitenblockes 6 bildet eine Staplertasche 33. Seitlich aussen ist zum Verschwenken des Gestells um die Quertraverse 9 eine Seitenwelle mit Bund 35 angebracht. Die Quertraverse 9 kann auch als Vollwelle oder Rohr ausgeführt sein, wodurch Seitenwellen 29 bzw. Seitenwellen mit Bund 35 entfallen. Weiterhin ist an dem Schenkel 42 aussenliegend eine Seitenleiste 41 befestigt, wobei auf diesem Seitenabsatz eine Seitenablage geschaffen wird, in der Spannelemente, z.B. Seile, Ketten, Drähte und Stangen zum Verzurren der ersten mit der letzten Traverse eingelegt werden können. Die obere Fläche 40 des Seitenblocks 6 kann als kundenspezifische Fläche ausgestaltet sein, wie beispielsweise die Anbringung von Bohrungen, Gewinde, Ösen, Taschen oder dergleichen.

Die staugeförderten Traversen können im Greifer gesichert werden, indem am Anfang und am Ende der Staustrecke gesonderte Leergestelle eingefügt werden, die beispielsweise einen verbreiterten waagerechten Schenkel 42 aufweisen und sich mit dem Greifer 31 bevorzugt verklemmen. Dieser Effekt kann beispielsweise durch eine Verzahnung in den Klemmflächen noch verbessert werden.

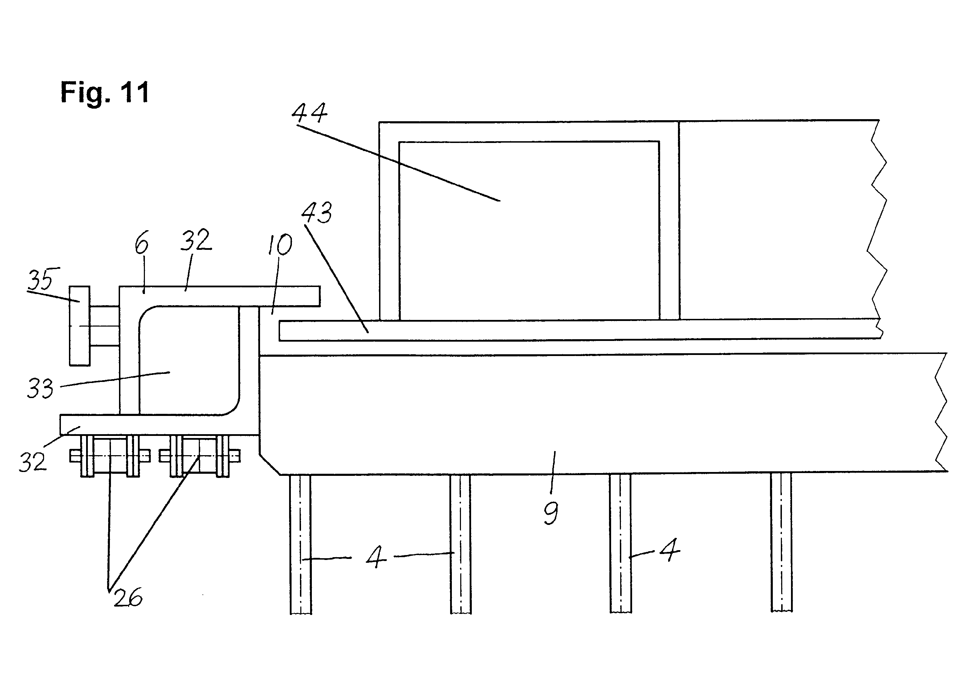

Die Ausführungsform nach Fig. 11 zeigt eine Traverse 9, die mit einer Adapterplatte 43 für einen Stapler mit Staplertasche 44 aufgenommen wird. Die Adapterplatte 43 kann frontal in die Aufnahmenut 10 der Traversen eingefahren werden. Vorteilhaft wäre aber die Verwendung eines beispielsweise hydraulisch betätigten Innengreifers.

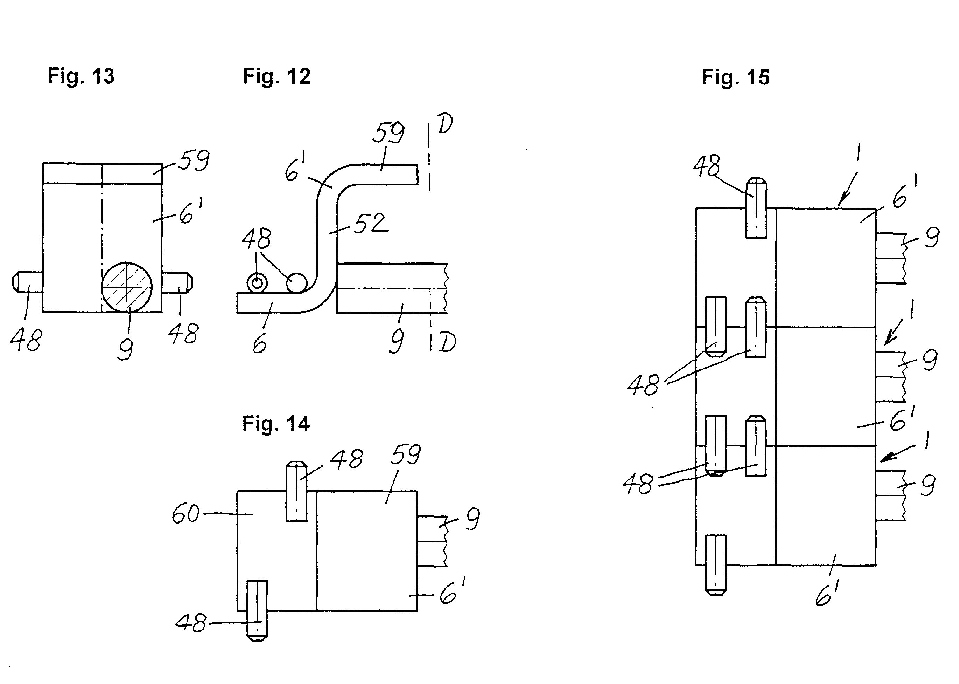

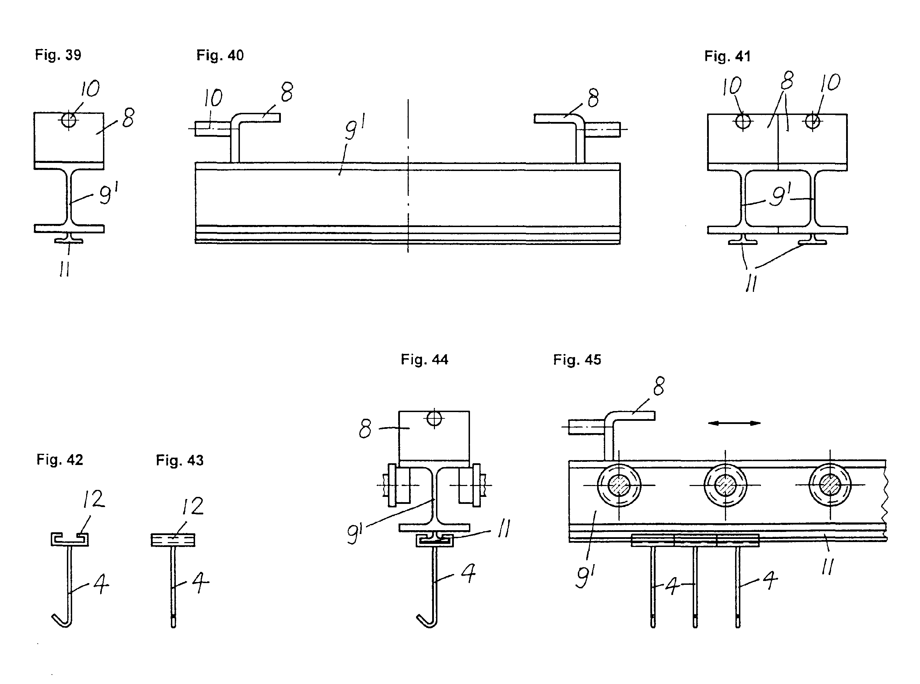

Die in den Figuren 12 bis 15 gezeigte Ausführungsfom der Vorrichtung weist zu beiden Seiten einen Seitenblock auf, der im Querschnitt Z-förmig ausgebildet ist. Diese Z-Form besteht aus einem vertikalen Schenkel 52, einen oberen nach innen gerichteten waagerechten Schenkel 59 und einen nach außen gerichteten unteren waagerechten Schenkel 60. Innen an dem vertikalen Schenkel 52 ist die Quertraverse 9 befestigt. Weiterhin sind an dem waagerechten Schenkel 60 Stifte 48 versetzt angeordnet, wobei im staugeförderten Zustand (Fig. 42) diese Stifte 48 das Drehmoment aufnehmen. Ein Verzurren für den staugeförderten Zustand erfolgt durch ein separates Element, das in geeigneter Weise die einzelnen Gestelle 1 zusammenhält. Dies kann mit Hilfe von Stangen, Drähten, Ketten, Seilen und dergleichen erfolgen.

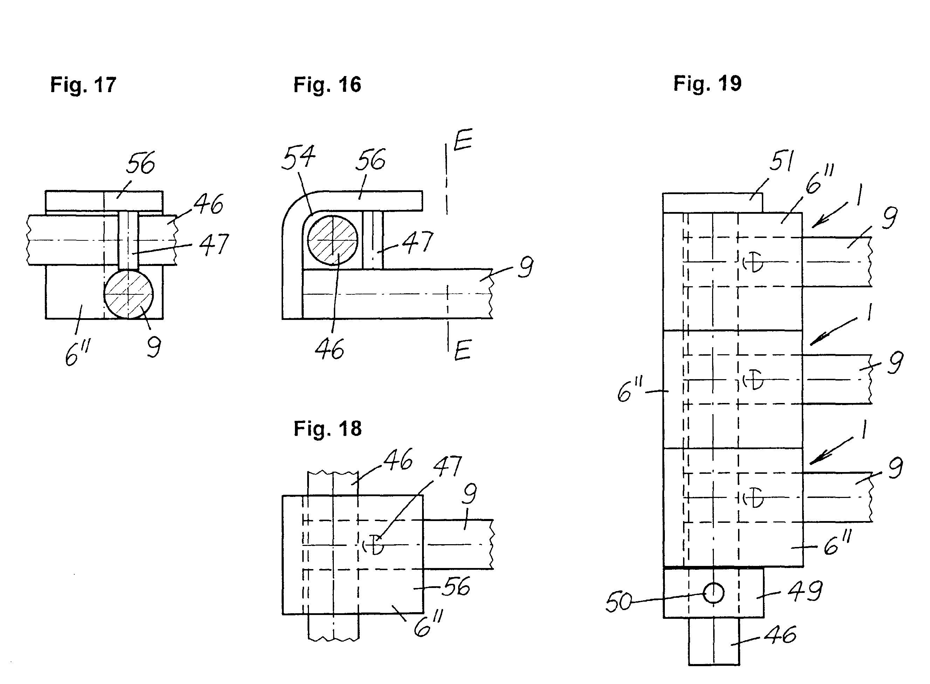

Bei der weiteren in den Figuren 16 bis 19 dargestellten Ausführungsform ist der Seitenblock 6" L-förmig ausgebildet und weist einen nach unten gerichteten vertikalen Schenkel 55 sowie einen oberen nach innen gerichteten waagerechten Schenkel 56 auf. An dem vertikalen Schenkel 55 ist unten die Quertraverse 9 befestigt und weiterhin ist im Abstand zu dem vertikalen Schenkel 55 zwischen dem waagerechten Schenkel 56 und Quertraverse 9 ein Querstift 47 angeordnet.

Durch die derart gebildete Öffnung 54 ist eine Sicherungswelle 46 steckbar, die in Förderrichtung 53 für die im staugeförderten Zustand aneinander liegenden Gestelle 1 durchgesteckt wird (Fig. 19), wobei zum Sichern der Welle 56 diese einen Kopf 51 und eine Endscheibe 49 mit Sicherungsstift 50 aufweist. Durch diese Sicherungswelle erfolgt die notwendige Drehmomentaufnahme, das heißt die Sicherungswelle 46 dient als Drehmomentstütze, als Verzurr-Element und sichert die einzelnen Gestelle gegen unbeabsichtigtes Lösen.

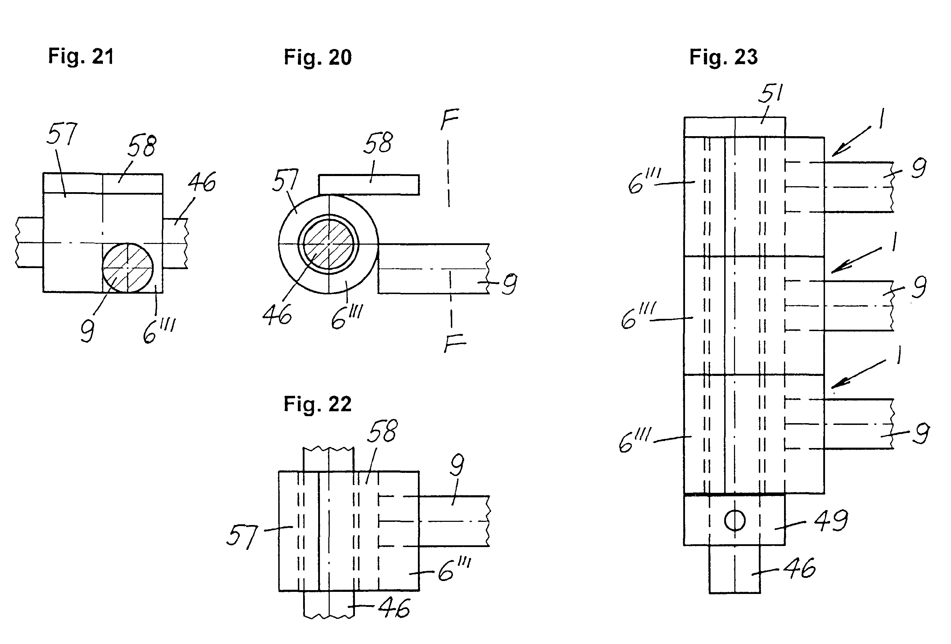

Die Figuren 20 bis 22 zeigen eine weitere Variante für die Ausbildung des Seitenblocks an einem derartigen Gestell, wobei der Seitenblock 6''' ein Rundrohr 57 aufweist, auf das ein waagerecht verlaufendes Flacheisen 58 geschweißt ist. Die Quertraverse 9 ist innen an dem Rundrohr 57 befestigt. Durch die Bohrung des Rundrohres 57 verläuft die Sicherungswelle 46. Zum besseren Säureablauf kann das Rundrohr 57 mit Ablaufbohrungen versehen werden. Außerdem kann das Flacheisen 58 entfallen, wenn zum Aufnehmen ein Außengreifer verwendet wird.

Die Figur 23 zeigt die Seitenblöcke 6''' im staugeförderten Zustand, wobei als Abwandlung der Sicherungswelle 46 auch eine Verschraubung gewählt werden kann.

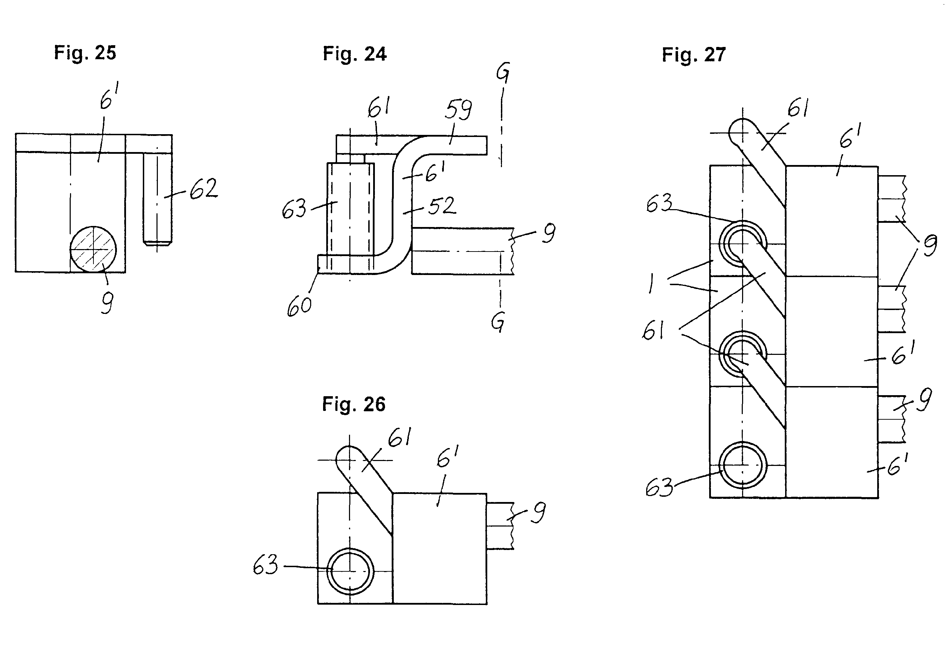

Bei den in den Figuren 24 bis 31 gezeigten Ausführungsformen wird eine Längsverriegelung, eine Querverriegelung und eine Drehmomentaufnahme gleichzeitig durch vertikales Stecken ermöglicht, sodass ein nachträgliches Sichern der Traversen nicht erforderlich ist.

Die in den Figuren 24 bis 27 gezeigte Ausführungsform der Vorrichtung weist zu beiden Seiten einen Seitenblock auf, der im Querschnitt Z-förmig ausgebildet ist. Diese Z-Form besteht aus einem vertikalen Schenkel 52, einem oberen nach innen gerichteten waagerechten Schenkel 59 und einen nach außen gerichteten unteren waagerechten Schenkel 60. Innen an dem vertikalen Schenkel 52 ist die Quertraverse 9 befestigt.

An dem oberen waagerechten Schenkel 59 schließt in entgegengesetzter Richtung ein Arm 61 an, der von dem Seitenblock 6' seitlich weggerichtet ist, wobei an seinem Ende ein vertikaler Steckbolzen 62 angebracht ist. An dem unteren waagerechten Schenkel 60 des Seitenblock 6' ist eine vertikal ausgerichtete Hülse 63 angeordnet.

Bei staugeförderten Gestellen (Fig. 27) ist der Steckbolzen 62 eines Gestells in die betreffende Hülse 63 eines nachfolgenden Gestells 1 eingesteckt, so dass die einzelnen Quertraversen 9 durch vertikales Stecken miteinander verriegelt sind.

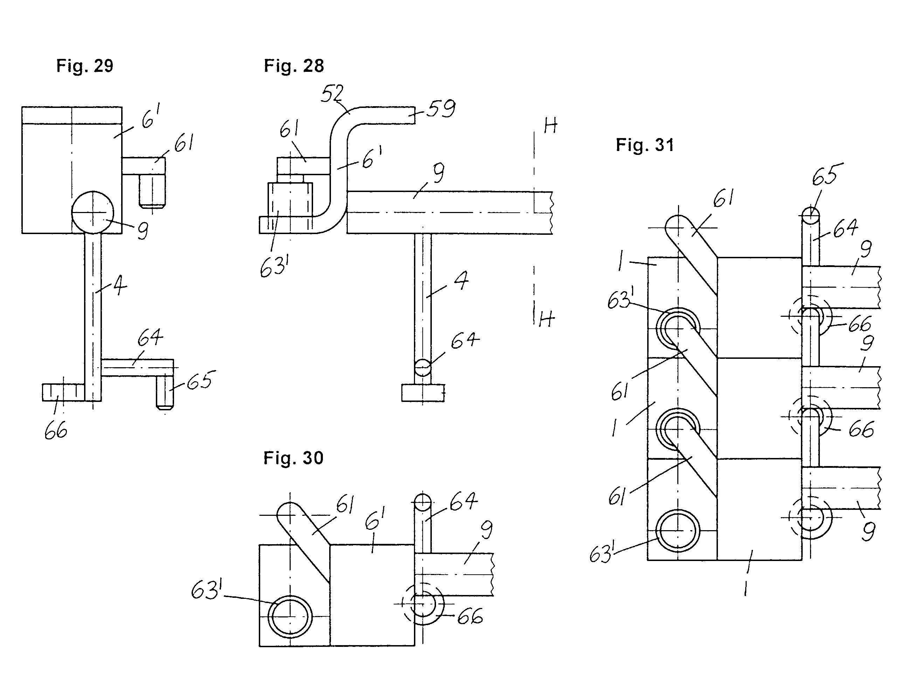

Bei der weiteren Ausführungsform nach den Figuren 28 bis 31 befindet sich nahe dem unteren Ende der seitlichen Streben 7 ein weiterer an einem Arm 64 angeordneter Steckbolzen 65, wobei an der Strebe 7 seitlich eine Lochscheibe 66 angeordnet ist und bei staugeförderten Gestellen 1 der Steckbolzen 65 eines Gestells in die Lochscheibe 66 eines nachfolgenden oder vorauslaufenden Gestells eingreift (Fig. 31).

Bei dieser Ausführungsform ist der Arm 61' am vertikalen Schenkel 52 des Seitenblocks 6' angeordnet und der vertikale Steckbolzen 62' verkürzt. An dem unteren waagerechten Schenkel des Seitenblocks 6' ist eine dementsprechend verkürzte Hülse 63' angeordnet. Bei dieser Ausführungsform erfolgt somit die Verriegelung sowohl im Bereich der Seitenblöcke 6' als auch im Bereich der Hakenenden.

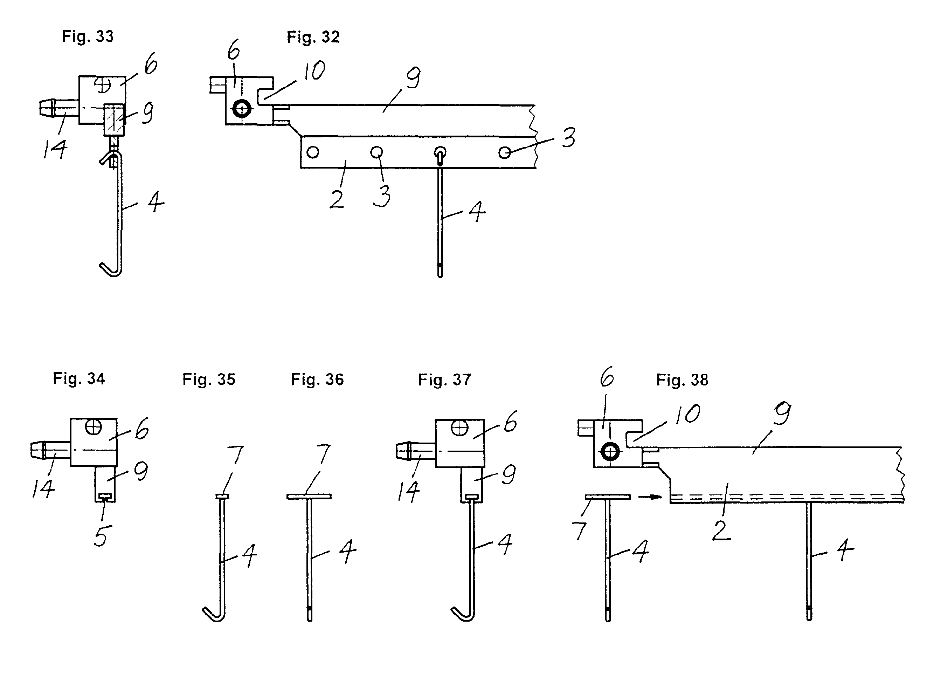

Bei der in Figuren 32 und 33 gezeigten Ausführungsform ist an der Unterseite der Quertraverse 9 ein Einhängstreifen 2 angeordnet, in dem Löcher oder Ösen 3 vorgesehen sind. In diese Löcher oder Ösen 3 können die Haken 4 in ein entsprechendes Loch rastfrei eingehängt werden. Eine solche Ausführungsform kann zum Einhängen von Drahthaken benutzt werden, wobei die Bauteile angebunden oder direkt eingehängt werden könne. Es können hierbei auch andere Lochformen, z. B. Schlüssellochformen oder andere Befestigungs- und Klemmmechanismen benutzt werden. Die Befestigung kann je nach Ausführungsform drehweich oder drehstarr sein.

Bei der in den Figuren 34 bis 38 gezeigten Ausführungsform ist an der Unterseite der Quertraverse 9 eine T-förmige Nut 5 vorgesehen, in die ein entsprechend am oberen Ende als Nutstein 7 ausgebildeter Haken 4 eingeschoben werden kann, wie dies insbesondere in Figur 38 gezeigt ist.

Die Ausführungsform nach den Figuren 39 bis 45 zeigt eine Quertraverse 9', die als I-förmiger Träger ausgebildet ist und die eine Innenaufnahme 8 an der Oberseite des Trägers 9' aufweist. Seitlich von der Innenaufnahme 8 befindet sich ein Wellenelement 10. An der Unterseite der Quertraverse 9 befindet sich eine T-förmige Schiene 11, an der entsprechend ausgebildete Haken 4 (Figuren 42, 43) aufgeschoben werden können. Dazu besitzen diese Haken eine entsprechende Aufnahme 12.

In Figur 41 sind zwei flächig aneinander geförderte Traversen 9' dargestellt, die mittels einer Spannvorrichtung, z. B. für einen Transport gesichert werden können. Die als I-förmige Träger ausgebildeten Quertraversen 9' können auf einem Rollen-Transport-System, wie in den Figuren 44, 45 dargestellt, transportiert werden.

### Bezugszeichenaufstellung

- 1: Gestell
- 2: Einhängstreifen
- 3: Löcher, Ösen
- 4: Haken
- 5: Nut
- 6, 6,' 6", 6'": Seitenblock
- 7: Nutstein
- 8: Innenaufnahme, Bügel
- 9, 9': Quertraverse
- 10: Wellenelement, Bolzen
- 11: T-förmige Schiene
- 12: Aufnahme
- 14: Stift
- 15: Stift
- 16: Aufnahmebohrung
- 17: kegelige Spitze
- 20: Spitze
- 21: Sicherungsleiste
- 22: U-förmige Distanzscheibe
- 26: zweispuriges Ketten-Fördersystem
- 28: Klemmzapfen
- 29: Wellenelement
- 31: Greifer
- 32: L-förmige Träger
- 33: Staplertasche
- 34: Führungsablage
- 35: Seitenwelle mit Bund
- 38: innenliegendes Wellenelement
- 40: kundenspezifische Fläche
- 41: Seitenleiste
- 42: waagerechte Schenkel
- 43: Adapterplatte
- 44: Staplertasche
- 46: Sicherungswelle
- 47: Querstift
- 48: Versetzte Stifte
- 49: Endscheibe
- 50: Sicherungsstift
- 51: Kopf
- 52: vertikaler Schenkel
- 54: Öffnung
- 55: vertikaler Schenkel
- 56: waagerechter Schenkel
- 57: Rundrohr
- 58: Flacheisen
- 59: oberer waagerechter Schenkel
- 60: unterer waagerechter Schenkel
- 61: Arm
- 62: Steckbolzen
- 63, 63': Hülse
- 64: Arm
- 65: Steckbolzen
- 66: Lochscheibe
- Bb: Breite Seitenblock
- Bt: Breite Traverse
- Hb: Höhe Seitenblock
- Ht: Höhe Traverse
- Ld: Länge Distanzstück
- Lt: Gesamtlänge Traverse
- Rh: Rasterabstand Haken
- Rt: Rasterabstand Traversen
- St: Spaltbreite Traverse für Badabstreifer

## Patentansprüche

1. Vorrichtung für die automatisierte Handhabung und Zwischenpufferung von aufhängbaren Bauteilen, wobei die Bauteile an staugeförderten Gestellen mit Haken aufgehängt sind, **dadurch gekennzeichnet, dass** eine Quertraverse (9, 9') mit zwei gegenüberliegenden nach innen gerichteten Leisten oder Rinnen (10, 42, 59, 56, 58, 8) zur Lastaufnahme vorgesehen sind, die sich oberhalb der Quertraverse (9, 9') befinden, dass an den Gestellen (1) Elemente (14, 48, 46, 61) zur Drehmomenteinleitung bei der Handhabung angeordnet sind, dass die Gestelle (1) auf der Vorder- und Rückseite Stauflächen aufweisen, dass die Gestelle (1) auf der Unterseite oder auf Nebenflächen Haken (4), Klammern, Befestigungspunkte oder -schienen besitzen und dass seitlich außen gegenüberliegend und nach unten gerichtet Auflageflächen für Regalkisten oder Fördersysteme vorgesehen sind.

2. Vorrichtung nach Anspruch 1, **dadurch gekennzeichnet, dass** die nach innen gerichteten Leisten oder Rinnen an Seitenblöcken (6, 6', 6", 6''') angeordnet sind, wobei an den Seitenblöcken (6) Aufnahmenuten (10), insbesondere innenliegend für Greifer vorgesehen sind.

3. Vorrichtung nach Anspruch 1 und 2, **dadurch gekennzeichnet, dass** zum Drehen der Traverse (9) um deren Längsachse an den Seitenblöcken (6) Wellenelemente (29) vorgesehen sind.

4. Vorrichtung nach Anspruch 1 bis 3, **dadurch gekennzeichnet, dass** an den Seitenblöcken (6) zum Zentrieren benachbarter Gestelle (1) Stifte (14, 15) sowie Aufnahmebohrungen (16) vorgesehen sind.

5. Vorrichtung nach Anspruch 4, **dadurch gekennzeichnet, dass** die Stifte (14) zylindrisch sind und eine kegelige Spitze (17) mit einem Absatz (18) aufweisen.

6. Vorrichtung nach Anspruch 1 bis 5, **dadurch gekennzeichnet, dass** die Stifte (15) scheibenförmig ausgebildet sind und an der Spitze (20) eine Sicherungsleiste (21) aufweisen.

7. Vorrichtung nach Anspruch 6, **dadurch gekennzeichnet, dass** auf den Stift (15) eine U-förmige Distanzscheibe (22) aufsteckbar ist.

8. Vorrichtung nach einem der Ansprüche 1 bis 7, **dadurch gekennzeichnet, dass** an den Seitenblöcken (6) Förderketten-Auflagenflächen (26) vorgesehen sind.

9. Vorrichtung nach einem der Ansprüche 1 bis 8, **dadurch gekennzeichnet, dass** die Gesamtlänge der Quertraverse (9) etwa 800 mm, 1200 mm oder 2400 mm beträgt.

10. Vorrichtung nach einem der Ansprüche 1 bis 9, **dadurch gekennzeichnet, dass** der Seitenblock (6) aus zwei L-förmigen Trägern (32) zusammengesetzt ist, die eine Staplertasche (33) bilden.

11. Vorrichtung nach Anspruch 10, **dadurch gekennzeichnet, dass** seitlich aussen an dem einen Träger (32) eine Führungsablage (34) und eine Seitenwelle mit Bund (35) vorgesehen sind.

12. Vorrichtung nach einem der Ansprüche 1 bis 11, **dadurch gekennzeichnet, dass** der Seitenblock (6, 6', 6", 6''') eine offene Bauweise ohne Hohlräume aufweist und dass im staugeförderten Zustand die Gestelle (1) über ein separates Element (48, 46) wie Stifte, Stangen, Drähte, Ketten, Seile und dergleichen verzurrt sind.

13. Vorrichtung nach Anspruch 1 bis 12, **dadurch gekennzeichnet, dass** der Seitenblock (6') im Querschnitt zur Förderrichtung (53) eine Z-Form aufweist, wobei die Quertraverse (9) an dem vertikalen Schenkel (52) des Seitenblocks (6') angeordnet ist.

14. Vorrichtung nach Anspruch 1 bis 13, **dadurch gekennzeichnet, dass** der Seitenblock (6") L-förmig ausgebildet ist und an dem vertikalen Schenkel (55) des "L" die Quertraverse (9) befestigt ist, während zwischen dem waagerechten Schenkel (56) des "L" und der Quertraverse (9) ein Querstift (47) angeordnet ist.

15. Vorrichtung nach Anspruch 14, **dadurch gekennzeichnet, dass** durch die von den Schenkeln (55, 56) des Seitenblocks (6"), den Querstift (47) und die Quertraverse (9) gebildete Öffnung (54) eine in Förderrichtung (53) verlaufende Sicherungswelle (46) angeordnet ist.

16. Vorrichtung nach einem der Ansprüche 1 bis 15, **dadurch gekennzeichnet, dass** der Seitenblock (6''') ein in Förderrichtung (53) verlaufendes Rundrohr (57) mit einem darauf befestigten und in etwa waagerecht verlaufenden Flacheisen (58) aufweist und die Quertraverse (9) an dem Rundrohr (57) befestigt ist.

17. Vorrichtung nach Anspruch 16, **dadurch gekennzeichnet, dass** die Sicherungswelle (46) innerhalb des Rundrohres (57) angeordnet ist.

18. Vorrichtung nach einem der Ansprüche 1 bis 17, **dadurch gekennzeichnet, dass** entgegen zum oberen waagerechten Schenkel (59) des Seitenblocks (6') ein seitlich über den Seitenblock (6') herausragender Arm (61) angeordnet ist, der an seinem Ende einen vertikalen Steckbolzen (62) aufweist, der in eine Hülse (63) eines nachfolgenden oder vorauslaufenden Gestells (1) eingreift, die am Seitenblock (6') befestigt ist.

19. Vorrichtung nach Anspruch 18, **dadurch gekennzeichnet, dass** der seitliche Arm (61) am vertikalen Schenkel (52) des Seitenblocks (6') angeordnet ist und der verkürzte Steckbolzen (62') in eine verkürzte Hülse (63') eingreift.

20. Vorrichtung nach einem der Ansprüche 1 bis 19, **dadurch gekennzeichnet, dass** die Haken (4) an der Quertraverse (9) in Löcher (3) oder Ösen in ein Lochraster frei einhängbar sind.

21. Vorrichtung nach einem der Ansprüche 1 bis 20, **dadurch gekennzeichnet, dass** die Haken (4) einen Nutenstein (7) aufweisen, mit dem sie in eine Nut (5) der Quertraverse (9) seitlich einschiebbar sind.

22. Vorrichtung nach einem der Ansprüche 1 bis 21, **dadurch gekennzeichnet, dass** die Quertraverse als I-Träger (9') ausgebildet ist und an den Enden jeweils nach innen gerichtete Bügel (8) vorgesehen sind, und an den Bügeln (8) nach außen gerichtete Bolzen (10) angebracht sind.
